# EUROPÄISCHE PATENTSCHRIFT

(11) **EP 3 380 836 B1**
(45) Veröffentlichungstag und Bekanntmachung des Hinweises auf die Patenterteilung: **11.09.2019**
(21) Anmeldenummer: 16791520.6
(22) Anmeldetag: 28.10.2016
(51) Int. Cl.: G01N 30/52, G01N 30/60

(54) **MONOLITHISCHE SORBENZIEN MIT METALL-UMMANTELUNG**
MONOLITHIC SORBENTS HAVING A METAL CLADDING
SORBANTS MONOLITHIQUES À ENVELOPPE MÉTALLIQUE

(30) Priorität: 25.11.2015 EP 15196322
(43) Veröffentlichungstag der Anmeldung: 03.10.2018
(73) Patentinhaber: Merck Patent GmbH, 64293 Darmstadt (DE)
(72) Erfinder: CABRERA, Karin, 63303 Dreieich (DE); KREHER, Klaus, 64839 Muenster (DE); JUNG, Gisela, 64331 Weiterstadt (DE)
(86) Internationale Anmeldenummer: PCT/EP2016/001802
(87) Internationale Veröffentlichungsnummer: WO 2017/088948

(56) Entgegenhaltungen:
- WO-A1-2013/152829
- WO-A1-2014/199444
- US-A1- 2005 155 933
- US-A1- 2006 032 816

## Beschreibung

Die Erfindung betrifft monolithische Sorbenzien, die mit Rohren aus Metall, bevorzugt Edelstahl, ummantelt sind. Durch ein besonderes Herstellverfahren kann die Metall-Ummantelung direkt auf die monolithischen Sorbenzien aufgebracht werden. Dadurch wird eine mechanisch sehr stabile, totvolumenarme Ummantelung der monolithischen Sorbenzien ermöglicht.

Zur Herstellung konventioneller Chromatographiesäulen mit partikulären Sorbenzien wird das Füllmaterial unter Druck in ein Edelstahl- oder Kunststoffrohr mit passgenauen Enden gefüllt. Dabei wird erreicht, dass das Sorbensbett am Mantel der Säule dicht anliegt und die Partikel homogen über den gesamten Querschnitt der Säule verteilt sind.

Ersetzt man, wie es z.B. in WO 94/19 687 und in WO 95/03 256 offenbart ist, partikuläre durch monolithische Sorbenzien, so ergibt sich das Problem, die Ummantelung des Sorbens flüssigkeitsdicht und druckstabil abzudichten. Anorganische oder organische Formkörper können bei ihrer Herstellung schrumpfen, so dass sie oft nicht in der ursprünglichen Form verbleiben können. Sie werden daher typischerweise mit einer neuen flüssigkeitsdichten und druckstabilen Ummantelung versehen werden. Nur so ist gewährleistet, dass Probe und Elutionsmittel ausschließlich durch das Sorbens transportiert werden.

Kommerziell erhältliche monolithische HPLC Säulen auf Kieselgel-Basis bestehen daher derzeit zumeist aus einem porösen Kieselgelstab, welcher mit einem mechanisch stabilen und lösungsmittelresistenten Polymer ummantelt wird, um die mobile Phase durch die Säule für die HPLC durchpumpen zu können.

Ein Nachteil der so hergestellten monolithischen HPLC Säulen ist deren Limitierung bezüglich Druckstabilität. Die Säulen können mit entsprechenden Eluentensystemen und Flussraten nur bis maximal 200 bar Säulenrückdruck betrieben werden, da die Ummantelung aus organischen Polymeren bei zu hohen Drücken nachgibt.

Die Güte einer monolithischen Säule für die HPLC kann beispielsweise über die Trennleistung (N/m) einerseits und über die Peaksymmetrie andererseits beschrieben werden. Eine gute analytische Säule besitzt Trennleistungen von ca. 70.000-100.000 N/m. Die Peakform entspricht im Idealfall einer Gauss'schen Glockenform. Abweichungen von dieser symmetrischen Form führen zu einem "fronting" oder zu einem "tailing". Die inhärente Trennleistung des Säulenkörpers sowie die Peaksymmetrie sollte sich nach Ummantelung zum lösungsmitteldichten, d.h. totvolumenarmen, Abschluss im chromatographischen Anwendungstest nicht mehr ändern. Bei ungeeigneten Ummantelungen liegt die Ummantelung nicht totvolumenarm an dem Säulenkörper an. Die Säule zeigt von Beginn an Vorpeaks oder zumindest ein "Peakfronting" infolge schnelleren Probedurchlaufs an der Grenzfläche Säulenkörper/Ummantelung. Ummantelungen mit ungeeigneten Polymeren können auch beim ersten chromatographischen Test noch gute Trennleistung und Peaksymmetrie liefern, aber bei weiterem Gebrauch zu einer Veränderung/Verschlechterung der beiden Güteparameter führen. Auch Ummantelungen mit prinzipiell geeigneten Polymeren können bei zu hohem Säulenrückdruck diese Effekte ziegen.

Konventionelle HPLC Säulen mit partikulären Sorbenzien dagegen sind wesentlich druckstabiler. Sie bestehen üblicherweise aus einem Edelstahlrohr, in welches unter Anwendung von hohen Drücken (>500 bar) Suspensionen von Kieselgelpartikeln gefüllt werden. Diese Säulen sind üblicherweise druckstabil bis ca. 400 bar. Neuere HPLC Säulen für die UHPLC (ultra high pressure liquid chromatography) bestehen ebenfalls aus geeigneten Edelstahlrohren, in welche die Kieselgelsuspensionen bei noch höheren Drücken gefüllt werden. Grund für die hohe Druckstabilität der partikulären Säulen ist insbesondere das Säulenrohr aus Edelstahl.

Es wäre daher wünschenswert, Edelstahlrohe auch als Ummantelung von monolithischen Sorbenzien einsetzen zu können.

In S. Miyazaki et al, J.Chromatogr. 2011, 1218, S. 1988-1994, werden monolithische Säulen aus Kieselgel in ein Edelstahlrohr eingebracht. Hierzu werden die Monolithen zunächst mit einem Polymerschlauch umgeben (z.B. Teflonschrumpfschlauch). Danach werden die so ummantelten Monolithen in ein Edelstahlrohr gegeben und das Volumen zwischen dem polymerummantelten Monolithen und dem Edelstahlrohr mit einem flüssigen Kunststoff (Epoxydharz) ausgegossen, der dann anschließend aushärtet. Der Prozess zur Herstellung dieser Säulen ist sehr aufwendig. Darüber hinaus hat sich gezeigt, dass diese Säulen nicht zu einer erhöhten Druckstabilität führen, weil beide Kunststoff- Zwischenschichten flexibel sind und bei Druckaufgabe nachgeben.

Bekannt sind weiterhin monolithische Säulen mit Edelstahl-Ummantelung, bei denen das monolithische Sorbens direkt in das Edelstahlrohr einpolymerisiert wird. (z.B. beschrieben in J. Zhong et al. J.Chromatogr. 2014, 1333, S. 79-86 oder F. Yang et al, Anal. Bioanal. Chem. 2013, 405, S. 6639-6648). Nachteil dieser Säulen ist, dass bei der Herstellung des Sorbens das Polymer-Netzwerk im Edelstahlrohr schrumpft. Dabei kommt es zu Totvolumina an der Grenzfläche Monolith/ Edelstahlrohr, welche zu verminderten Trennleistungen führen. WO 2014/199444 beschreibt ein Verfahren zur Ummantelung monolithischer Sorbenzien, bei dem ein Metallrohr erhitzt wird, um dessen Durchmesser zu vergrößern, das monolithische Sorbens eingebracht wird und das Metallrohr dann abgekühlt wird.

Es wurde nun gefunden, dass monolithische Sorbenzien z.B. auf Kieselgel-Basis druckstabil und totvolumenarm mit Metallrohren, wie z.B. Edelstahlrohren, ummantelt werden können, indem eine monolithische Säule in ein Metallrohr mit leicht größerem Durchmesser eingeführt wird und das Metallrohr danach mittels Kaltumformen auf das Sorbens aufgebracht wird, bis es totvolumenarm auf dem Sorbens aufliegt.

Die resultierenden monolithischen HPLC Säulen können wegen des mechanisch stabileren Metalls bis zu Säulenrückdrücken von ca.500 bar betrieben werden.

Gegenstand der vorliegenden Erfindung ist daher ein Verfahren zur Ummantelung von monolithischen Sorbenzien mit einer Ummantelung aus Metall und somit ein Verfahren zur Herstellung von Chromatographiesäulen zumindest bestehend aus einem monolithischen Sorbens, das mit einem Metallrohr ummantelt ist durch
a) Bereitstellen eines zylinderförmigen monolithischen Sorbens und eines Metallrohrs, das einen inneren Durchmesser hat, der größer ist als der Außendurchmesser des monolithischen Sorbens;
b) Einführen des monolithischen Sorbens in das Metallrohr;
das Verfahren gekennzeichnet durch:
c) Aufbringen des Metallrohrs auf das monolithische Sorbens durch Kaltumformen.

Aufbringen bedeutet in diesem Fall, dass das Metallrohr durch Kaltumformen so lange bearbeitet wird, bis dessen Innendurchmesser so stark verkleinert ist, dass das Metallrohr über die Länge des Sorbens totvolumenarm auf dem Sorbens aufliegt.

In einer bevorzugten Ausführungsform wird das Metallrohr direkt und ohne Zwischenschicht aus einem anderen Material, wie z.B. einem Polymer, auf das monolithische Sorbens aufgebracht.

In einer bevorzugten Ausführungsform ist das Metallrohr aus Edelstahl. In einer bevorzugten Ausführungsform erfolgt das Kaltumformen in Schritt c) mittels Rundkneten.

In einer bevorzugten Ausführungsform erfolgt das Rundkneten in Schritt c) mit einem Hämmerwerkzeug mit zwei Hämmerbacken und die Drehzahl beträgt zwischen 500 min⁻¹ und 1500 min⁻¹.

In einer bevorzugten Ausführungsform ist in Schritt a) der innere Durchmesser des Metallrohrs 0,05 bis 2 mm größer ist als der Außendurchmesser des monolithischen Sorbens.

In einer besonders bevorzugten Ausführungsform ist in Schritt a) der Innendurchmesser des Metallrohrs 0,1 bis 0,25 mm größer als der Außendurchmesser des monolithischen Sorbens.

In einer bevorzugten Ausführungsform besteht das monolithische Sorbens aus Kieselgel oder anorganisch/organischen Hybrid-Materialien. Optional ist das Sorbens mit Separationseffektoren funktionalisiert.

In einer bevorzugten Ausführungsform wird in Schritt a) ein monolithisches Sorbens bereitgestellt, das eine Länge von 2,5 cm bis 30 cm hat und einen Durchmesser von 1 mm bis 30 mm.

In einer bevorzugten Ausführungsform werden in einem zusätzlichen Schritt d) das mit dem Metallrohr ummantelte monolithische Sorbens mit Anschlüssen für Lösungsmittel zu- und ablauf versehen.

Figur 1 zeigt ein erfindungsgemäß mit einem Edelstahlrohr direkt ummanteltes monolithisches Sorbens aus Kieselgel. Es gibt keine polymere Zwischenschicht und keinen Hohlraum zwischen Sorbens und Ummantelung.

Figur 2 zeigt ein Chromatogramm, das erzeugt wurde durch Chromatographie auf einem monolithischen Sorbens aus Kieselgel, direkt mit einem Metallrohr ummantelt und in situ RP18 derivatisiert in der Dimension 100x3mm. Nähere Angaben finden sich in Beispiel 1.

Figur 3 zeigt ein Chromatogramm, das erzeugt wurde durch Chromatographie auf einem monolithischen Sorbens aus Kieselgel mit C18e Modifizierung, direkt mit einem Metallrohr ummantelt in der Dimension 150x3mm. Nähere Angaben finden sich in Beispiel 2.

Figur 4 zeigt ein weiteres Chromatogramm, das erzeugt wurde durch Chromatographie auf einem monolithischen Sorbens aus Kieselgel mit C18e Modifizierung, direkt mit einem Metallrohr ummantelt in der Dimension 150x3mm. Nähere Angaben finden sich in Beispiel 3.

Figur 5 zeigt ein Fließ-Schema zur Durchführung einer Untersuchung zur Druckstabilität mit einem Kieselgelmonolith mit RP18 Modifizierung in der Dimension 100-3mm.

Figuren 6A bis E zeigen die dazugehörigen Chromatogramme. Nähere Angaben finden sich in Beispiel 4.

Totvolumenarme Ummantelung bedeutet erfindungsgemäß, dass das Totvolumen bzw. der Hohlraum zwischen monolithischem Formkörper als Sorbens und der Ummantelung so gering ist, dass dadurch kein negativer Einfluss auf die Trennleistung der Chromatographiesäule entsteht.

Eine Chromatographiesäule besteht zumindest aus einem Sorbens und einer Ummantelung. In der Regel weist die Chromatographiesäule zusätzlich Dichtungen und/oder Filter auf sowie Anschlüsse für die Zufuhr von Probe und Elutionsmittel. Die Chromatographiesäule kann direkt mit entsprechenden Anschlüssen versehen werden oder in ein Kartuschensystem eingelegt werden. Chromatographiesäulen und ihre Anwendung sind dem Fachmann bekannt.

Kaltumformen, auch Kaltumformung, ist dem Fachmann aus der Metallverarbeitung bekannt. Es handelt sich dabei um Verfahren, bei denen Metallrohre ohne Einwirkung von großen Temperaturen verformt werden. Die Temperatur bei der Verformung liegt bei diesen Verfahren in der Regel bei unter 100°C, typischerweise bei Raumtemperatur. Beispiele für Kaltumformung sind Ziehen, Pilgern und Rundkneten. Allen Verfahren der Kaltumformung ist gemeinsam, dass sie zumindest den Innendurchmesser eines Rohres verändern, insbesondere verkleinern, können. Typischerweise werden zugleich auch der Außendurchmesser und ggf. die Wandstärke des Metallrohres verändert.

Ziehen, auch Kaltziehen genannt, ist ein Verfahren, bei dem das Metallrohr durch eine Matrize gezogen wird, die kleiner als das Rohr ist. Um dies zu ermöglichen, wird das Rohr an einer Seite leicht angespitzt bzw. so bearbeitet, dass es in die Matrize passt. Dann wird es auf einer Ziehbank durch die Matrize gezogen. Es sind Verfahren des Kaltziehen bekannt, die ohne Innenwerkzeug arbeiten und solche, die mit einem Innenwerkzeug oder Dorn arbeiten, der den Innendurchmesser des Rohres definiert. Im erfindungsgemäßen Verfahren wird ohne Dorn gearbeitet.

Das Pilgern oder Rohrverengen reduziert typischerweise den Außendurchmesser, den Innendurchmesser und die Wanddicke. Das Pilgern erfolgt mithilfe von Pilgerwalzen. Eine z.B. geeignete Apparatur weist ein Gerüst mit zwei Walzenbacken auf, die eine annähernd konisch verlaufende Aussparung aufweisen. Die Walzenbacken können auf dem zu walzenden Rohr abrollen und so den Außendurchmesser und damit auch die Wandstärke und den Innendurchmesser des durchlaufenden Rohres verringern. Oft erfolgt zudem eine Drehung des Rohres oder der Walzen während des Durchlaufens, so dass ein genau kreisförmiger Rohrquerschnitt erzeugt wird.

Rundkneten, früher auch als Rundhämmern bezeichnet, ist ein präzises Verfahren zur spanlosen Umformung von Rohren, Stäben und anderen rotationssymmetrischen Werkstücken.

Das Rundknetverfahren ist ein Kaltumformungsverfahren, bei dem durch Krafteinwirkung der Querschnitt von Massiv- Stäben oder Rohren vermindert wird.

Es gehört zu der Sparte der Net-Shape-Forming-Verfahren, die sich dadurch auszeichnen, dass die Endkontur der umgeformten Werkstücke ohne oder mit nur minimaler spanender Bearbeitung erreicht wird. Beim Rundkneten sind die Umformwerkzeuge (Knetbacken) konzentrisch um das Werkstück angeordnet.

Die Umformwerkzeuge oszillieren hochfrequent mit geringem Hub und üben so auf das umschlossene Werkstück radiale Druckkräfte aus und geben dem bearbeiteten Werkstück dadurch eine geringeren Querschnitt. In den meisten Fällen besteht ein Werkzeugsatz aus zwei oder vier Knetbacken. Je nach Anwendung können auch zwei bis acht Backen eingesetzt werden.

Monolithische Sorbenzien im Sinne der vorliegenden Erfindung sind anorganische, organische oder anorganisch/organische Hybrid-Materialien in Form eines säulenförmigen bzw. zylindrischen Formkörpers. Sie bestehen aus einem einzigen, bevorzugt homogenen, Formkörper. Beispiele für geeignete Materialien sind gegebenenfalls entsprechend funktionalisierte Polymere, wie Polyacrylamide, Polyacrylate, Vinylpolymere oder Polystyrol/Divinylbenzol Copolymere, oder Kieselgel, Silikate, Metalloxide wie Aluminiumoxid, Eisenhydroxide, Hydroxylapatit oder Glas oder auch Kompositmaterialien, z.B. aus Siliziumdioxid mit Anteilen anderer Oxide, wie z.B. ZrO₂. Weiterhin geeignet sind anorganisch/organische Hybrid-Materialien. Dies können beispielsweise zum einen organisch/anorganische Co-Polymerisate sein oder Silica-Hybrid-Materialien, bei denen das Monomersol zur Herstellung nicht nur Alkoxysilane sondern auch Organoalkoxysilane, d.h. typischerweise zumindest 10%, bevorzugt 20 bis 100% Organoalkoxysilane, enthält. Besonders bevorzugt sind Kieselgel oder Silica-Hybrid-Materialien. Diese werden bevorzugt aus Alkoxysilanen mittels eines Sol-Gel Verfahrens hergestellt.

Geeignete Alkoxysilane sind Tetraalkoxysilane (RO)₄Si, wobei R typischerweise ein Alkyl, Alkenyl oder Aryl- Rest ist, wie C1 bis C20 Alkyl, C2 bis C20 Alkenyl oder C5 bis C20 Aryl, bevorzugt ein C1 bis C8 Alkylrest. Besonders bevorzugt sind Tetraethoxy- und insbesondere Tetramethoxysilan. Genauso kann das Tetraalkoxysilan verschiedene Alkylreste enthalten. Statt in ihrer monomeren Form können die Alkoxysilane auch vorpolymerisiert als z.B. Oligomere eingesetzt werden.

In einer anderen Ausführungsform können statt eines Alkoxysilans oder Mischungen zweier oder mehrerer Alkoxysilane Organoalkoxysilane oder Mischungen von Organoalkoxysilanen mit Tetraalkoxysilanen eingesetzt werden. Geeignete Organoalkoxysilane sind solche, in denen ein bis drei, bevorzugt eine Alkoxygruppen eines Tetraalkoxysilans durch organische Reste, wie bevorzugt C1 bis C20 Alkyl, C2 bis C20 Alkenyl oder C5 bis C20 Aryl ersetzt sind. Weitere Organoalkoxysilane sind z.B. in WO 03/014450 oder US 4,017,528 offenbart. Statt in ihrer monomeren Form können die Alkoxysilane bzw. Organoalkoxysilane auch vorpolymerisiert als z.B. Oligomere eingesetzt werden.

Die Tetraalkoxysilane bzw. Organoalkoxysilane werden typischerweise als 2 bis 25%ige, bevorzugt 5 bis 10%ige (Gew.%) Lösung in einem organischen Lösungsmittel wie z.B. Toluol oder Ethanol eingesetzt.

In WO 95/03256 und besonders in WO 98/29350 werden erfindungsgemäß bevorzugte Verfahren zur Herstellung anorganischer monolithischer Formkörper nach einem Sol-Gel Prozess offenbart.

Weiterhin sind monolithische Sorbenzien im Sinne der vorliegenden Erfindung mittels 3D Druck hergestellte monolithische Sorbenzien, insbesondere solche aus Druck-und Lösungsmittel-stabilen thermoplastischen Kunststoffen.

In einer bevorzugten Ausführungsform ist das thermoplastische Polymer ausgewählt aus der Gruppe der Polyetherimide, Polyarylate , Polyetherketone , Polyester, Polyamide, Polyimide, Polyamidimide, Polybenzimidazole, Polyphenylensulfide, Polyphenylsulfone oder Polyoxymethylen sowie Mischungen aus zwei oder mehreren dieser Materialien.

In einer bevorzugten Ausführungsform hat das thermoplastische Polymer einen Schmelzpunkt über 150°C.

In einer besonders bevorzugten Ausführungsform ist das thermoplastische Polymer PEEK (Polyetheretherketon) oder PPS (Polyphenylensulfid).

In einer weiteren bevorzugten Ausführungsform enthält das thermoplastische Polymer Additive, wie z.B. Fasermaterialien, anorganischen Materialien oder Pigmente, z.B. Kreide, Talkum, Glimmer oder anorganische Oxide, wie Siliziumdioxid, Aluminiumoxid, Siliciumcarbid, Glas- oder Kohlefasern, bevorzugt Siliziumdioxid, Aluminiumoxid, Titandioxid, Zirkonoxid, oder Siliciumcarbid oder Mischungen davon, besonders bevorzugt Siliziumdioxid.

Die monolithischen Sorbenzien, auch poröse Formkörper oder Formkörper genannt, sind säulenförmig, d.h. zylindrisch. Typische Durchmesser liegen zwischen 0,5 mm und 10 cm, bevorzugt zwischen 1 mm und 5 cm. Typische Längen liegen zwischen 1 cm und 50 cm, bevorzugt zwischen 2,5 cm und 25 cm.

Die monolithischen Sorbenzien weisen erfindungsgemäß eine monomodale, bimodale oder oligomodale Porenstruktur auf. Bevorzugt weisen sie zumindest Makroporen mit einem Durchmesser größer 0,1 µm auf, die als Durchflussporen dienen. Typischerweise weisen die Makroporen Durchmesser zwischen 0,1 und 10000 µm auf, bevorzugt zwischen 0,5 und 1000 µm. In einer bevorzugten Ausführungsform weist der Formkörper eine bimodale oder oligomodale Porenverteilung auf, bei der zusätzlich zu den Makroporen noch z.B. Mesoporen mit einem Porendurchmesser zwischen 2 und 500 nm, bevorzugt zwischen 5 und 100 nm, vorhanden sind. In einer besonders bevorzugten Ausführungsform befinden sich die Mesoporen in den Wänden der Makroporen und vergrößern so die Oberfläche des Formkörpers.

Bevorzugte monolithische Sorbenzien besitzen ein bimodales Porensystem mit Makroporen als Durchflussporen mit einem Makroporendurchmesser von ca. 0,2 bis 5 µm und Mesoporen in den Wänden der Makroporen mit 4 bis 50 nm Durchmesser.

Durchflussporen sind Poren oder Kanäle, die den Durchfluss von z.B. einer Flüssigkeit oder einem Gas durch einen Formkörper erlauben. Dabei kann die Flüssigkeit an einer Stelle in den Formkörper eintreten und an einer anderen Stelle wieder austreten. Bei säulenförmigen Formkörpern tritt die Flüssigkeit bevorzugt an einem Ende der Säule ein und am anderen wieder aus. Dementsprechend sind Poren, die sich nur in Form einer Einkerbung in der Oberfläche eines Formkörpers befinden, keine Durchflussporen.

Die Durchmesser der Makroporen werden typischerweise mittels Quecksilberporosimetrie gemessen während die der Mesoporen mittels Stickstoffadsorption/desorption nach BET ermitteln werden.

Das Gesamtporenvolumen der erfindungsgemäß eingesetzten Formkörper liegt typischerweise zwischen 0,1mL/g und 10 mL/g, bevorzugt zwischen 1 mL/g und 8 mL/g. Die Oberfläche der erfindungsgemäß eingesetzten Formkörper liegt typischerweise zwischen 1 m²/g und 1000 m²/g, bevorzugt zwischen 5 m²/g und 500 m²/g.

Eine Ummantelung für monolithische Sorbenzien sollte idealerweise alle der folgenden Eigenschaften erfüllen:
- lösungsmittelstabil gegenüber in der Chromatographie gebräuchlichen Lösungsmitteln, wie z.B. Acetonitril, MeOH, Wasser, Dioxan, Heptan usw., da die mobile Phase aus einem oder mehreren dieser Komponenten besteht.
- mechanisch stabil, um bei höheren Flussraten ohne Probleme schneller chromatographieren zu können. Bei höheren Flussraten baut sich ein Rückdruck innerhalb der Säule auf. Die Ummantelung sollte auch bei einem Rückdruck von bis zu 400 bar ihre Geometrie nicht verändern.
- totvolumenarme Auflage auf dem monolithischen Säulenkörper, um Trennleistungsverluste und ein Fronting der Substanz-Peaks bzw. Vorpeaks durch unkontrollierte Eluentenströme an der Grenzfläche Metall-Säulenkörper zu vermeiden.
- porenfrei, um ein nachteiliges Tailing der Substanz-Peaks durch unkontrollierte Diffusionsvorgänge in Mikroporen der Ummantelung zu vermeiden.

Es wurde nun unerwartet gefunden, dass ein aus der Metallverarbeitung bekanntes Verfahren, das Kaltumformen, geeignet ist, monolithische Sorbenzien mit Metallrohren zu ummanteln. Es wurde gefunden, dass sogar sehr starre und zerbrechliche Formkörper aus Kieselgel mittels Kaltumformen ummantelt werden können. Das monolithische Sorbens zerbricht während des Kaltumformens nicht. Vielmehr entsteht eine Ummantelung, die gleichmäßig, direkt und totvolumenarm auf dem Sorbens aufliegt. Im Gegensatz zu bekannten Verfahren liegt bei dem erfindungsgemäßen Verfahren keine Zwischenschicht zwischen dem Sorbens und der Metall-Ummantelung vor.

Für das erfindungsgemäße Verfahren wird ein säulenförmiges monolithisches Sorbens und ein Metallrohr bereitgestellt. Damit das Sorbens in das Metallrohr hineingeschoben werden kann, muss das Rohr einen Innendurchmesser aufweisen, der größer ist als der Durchmesser des Sorbens. Typischerweise hat das Metallrohr einen inneren Durchmesser, der 0,05 bis 2 mm größer ist als der Außendurchmesser des monolithischen Sorbens. Bevorzugt sind der Innendurchmesser des Metallrohrs und der Durchmesser des monolithischen Sorbens möglichst ähnlich, damit nach dem Einschieben kein großer Spalt zwischen Sorbens und Metallrohr entsteht. Bevorzugt ist der Innendurchmesser des Metallrohrs zwischen 0,05 und 1 mm, besonders bevorzugt zwischen 0,1 und 0,25 mm größer als der Durchmesser des monolithischen Sorbens.

Das Metallrohr kann länger, gleich lang oder kürzer sein als das monolithische Sorbens. Ist es länger, wird es abgeschnitten, oder in den Überstand an beiden Seiten kann später typischerweise ein Verbindungs-, Dichtungs- oder Frittensystem eingeführt werden. Ist es kürzer, wird das überstehende Sorbens nach der Ummantelung auf beiden Seiten abgeschnitten, so dass es plan mit dem Metallrohr endet.

Bevorzugt endet das Sorbens plan mit der Ummantelung. Die so gefertigte Säule kann dann direkt als Kartusche verwendet werden. Beispielsweise kann sie in ein dafür vorgesehenes Rohr gelegt und mit passenden Endstücken am Rohr befestigt werden. Möglich ist auch ein Anbringen von Gewinden mit einem geeigneten Gewindeschneider, um dann Standardendstücke darauf schrauben zu können. Des Weiteren kann alternativ auch eine Nut in das Rohr angebracht werden, um eine Verschraubung, z.B. eine ManuCART® Verschraubung, für den Anschluss an das HPLC System zu verwenden. Der Fachmann kennt die verschiedenen Anschlusssysteme für Chromatographiesäulen.

Geeignete Metallrohre, bevorzugt Edelstahlrohre, weisen bevorzugt eine Wanddicke von 1 mm bis 7,5 mm auf. Besonders bevorzugt ist eine Wanddicke zwischen 2 und 3 mm, insbesondere um 2,5 mm.

Die Metallrohre können beispielsweise aus Edelstahl, Stahl oder Titan bestehen. Rohre aus Edelstahl sind bevorzugt.

Geeignete Edelstahlqualitäten sind 1.4435, 1.4441 und 1.4401.

Das monolithische Sorbens wird in das Metallrohr eingeführt.

Nach dem Einführen des monolithischen Sorbens in das Metallrohr erfolgt das Kaltumformen des Metallrohrs auf das monolithische Sorbens.

Geeignete Kaltumform-Verfahren sind Pilgern, Ziehen oder Rundkneten. Bevorzugt erfolgt das Kaltumformen mittels Rundkneten.

Das Rundkneten erfolgt bevorzugt in mehreren Durchläufen, in denen typischerweise kontinuierlich und von einer Seite des Rohrs zur anderen geknetet wird. Bevorzugt wird hierzu ein Hämmerwerkzeug mit zwei Hämmerbacken und 10 bis 16 Rollen, besonders bevorzugt 12 Rollen, eingesetzt. Die Hämmerkopfgröße liegt dabei bevorzugt zwischen 2 mm und 20 mm, besonders bevorzugt bei ca. 10 mm. Die Drehzahl beträgt bevorzugt zwischen 500 min⁻¹ und 1500 min⁻¹, besonders bevorzugt ca. 1000 min⁻¹.

Möchte man überprüfen, ob das Metallrohr ausreichend dicht und totvolumenarm am Sorbens anliegt, kann man dies beispielsweise anhand einer chromatographischen Trennung tun. Anhand der erhaltenen Chromatogramme kann der Fachmann entscheiden, ob die Qualität der Trennung ausreicht oder ob noch Mängel auftreten, die von einem Totvolumen zwischen Sorbens und Ummantelung herrühren. Ein alternativer, nicht ganz so genauer Test ist ein Drucktest. Dazu wird bei Aufgabe eines Lösungsmittels der Rückdruck der Säule gemessen. Der Fachmann kennt die für die entsprechenden Sorbenzien zu erwartenden Rückdrücke. Sind diese nicht so hoch wie erwartet, ist dies ein Zeichen für Totvolumina zwischen Sorbens und Ummantelung. Die Kaltumformung wird so lange durchgeführt, bis eine für den vorgesehenen Zweck ausreichend totvolumenarme Ummantelung erhalten wird.

Mit dem erfindungsgemäßen Verfahren können organische und anorganische Formkörper oder auch anorganisch-organische Hybrid-Formkörper ummantelt werden, wie sie als Sorbenzien für chromatographische Zwecke eingesetzt werden. Das Verfahren ist besonders schonend, da es bei Raumtemperatur durchgeführt werden kann. Während die Ummantelung mit organischen Polymeren oft bei höheren Temperaturen erfolgt und so z.B. temperaturempfindliche Separationseffektoren zerstören werden können, besteht diese Gefahr bei dem erfindungsgemäßen Verfahren nicht. Das monolithische Sorbens kann wie unten erläutert schon vor der Ummantelung mit Separationseffektoren funktionalisiert werden, ohne dass die Gefahr besteht, dass diese während der Ummantelung zerstört werden.

Für den Einsatz zur chromatographischen Trennung mindestens zweier Substanzen werden die erfindungsgemäß ummantelten monolithischen Sorbenzien bevorzugt noch mit Anschlusssystemen für Lösungsmittel- zu und ablauf und optional Filtern, Dichtungen etc. versehen. Dazu kann das ummantelte Sorbens in ein Kartuschensystem mit den entsprechenden Anschlüssen eingelegt werden oder direkt angeschlossen werden. Derartige Konstruktionen sind dem Fachmann für Chromatographiesäulen mit partikulären oder monolithischen Sorbenzien bekannt.

Für chromatographische Auftrennungen werden die Formkörper vor der Ummantelung oder nach der Ummantelung zumeist mit Separationseffektoren funktionalisiert.

Die Funktionalisierung des Sorbens dient zur Einstellung bestimmter Trenneigenschaften durch Einführung bestimmter funktioneller Gruppen. Eine funktionelle Gruppe, die auch zur Einführung weiterer funktioneller Gruppen dienen kann, ist eine OH-Gruppe. Geeignete funktionelle Gruppen, die die Trenneigenschaften beeinflussen, auch Separationseffektoren genannt, sind dem Fachmann bekannt. Beispiele sind ionische Gruppen für die lonenaustauschchromatographie oder hydrophobe Gruppen für die reversed-phase-Chromatographie. Geeignete Derivatisierungsverfahren und geeignete Separationseffektoren sind dem Fachmann bekannt und in Handbüchern wie Packings and Stationary Phases in Chromatographic Techniques (K.K: Unger ed.; Marcel Dekker, New York und Basel (1990)) oder Porous Silica (K.K. Unger ed.; Elsevier, Amsterdam, Oxford, New York (1979)) beschrieben.

Bevorzugte Separationseffektoren sind
- Aminogruppen
- Aminofunktionelle Gruppen
- Alkylgruppen, insbesondere C8 und C18 Gruppen
- Diol
- Cyano
- Phenyl
- Kationentauscher wie z.B. SO₃²⁻
- Anionentauscher

Die Separationseffektoren können vor oder nach der erfindungsgemäßen Ummantelung aufgebracht werden. Bevorzugt werden die Separationseffektoren vor der Ummantelung aufgebracht. Dies ist problemlos möglich, da die Ummantelung mit dem Metallrohr bei Raumtemperatur stattfindet und die Separationseffektoren an der Grenzfläche zur Ummantelung nicht abgebrannt werden, wie das z.B. bei Ummantelungen mit organischen Polymeren oft der Fall ist, weil sie bei erhöhten Temperaturen aufgebracht werden.

Die erfindungsgemäß ummantelten monolithischen Sorbenzien zeigen hervorragende Trenneigenschaften. Auch nach Lagerung in Lösungsmitteln und häufiger Benutzung bei unterschiedlichen Drücken zeigt sich keine Verschlechterung der Trennleistungen. Die erfindungsgemäß ummantelten Sorbenzien können bei Lösungsmitteldrücken bis zu oder sogar über 500 bar, bevorzugt zwischen 50 und 400 bar, eingesetzt werden. Somit gewährleistet die erfindungsgemäße Ummantelung erstmals die Herstellung von monolithischen Chromatographiesäulen, die sowohl mechanisch und chemisch besonders stabil sind, als auch eine Ummantelung aufweisen, die totvolumenarm auf den monolithischen Formkörpern aufliegt. Eine polymere Zwischenschicht zwischen Sorbens und Ummantelung wird nicht benötigt. Dadurch, dass die Ummantelung nachträglich nach der Herstellung auf das monolithische Sorbens aufgebracht wird, spielt das Schrumpfen des Sorbens bei der Herstellung keine Rolle. Die erfindungsgemäß hergestellten Chromatographiesäulen können für HPLC (high pressure liquid chromatography) wie auch für UHPLC (ultra high pressure liquid chromatography) Verfahren eingesetzt werden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Beispiel 1

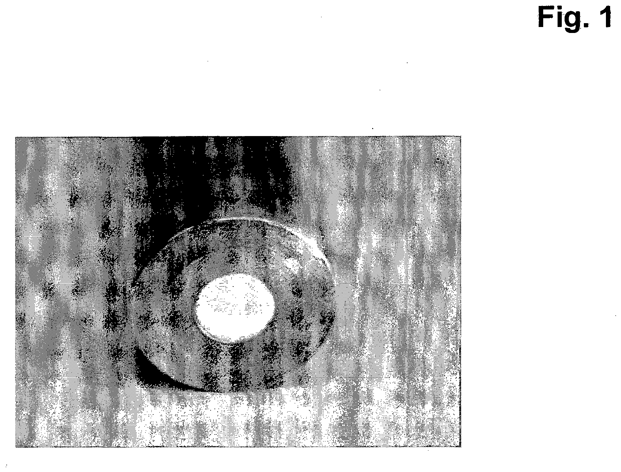

Kieselgelmonolithen der Dimension 150x3mm wurden entsprechend einem Sol Gel Prozess wie in WO98/29350 und EP 1843155 offenbart, hergestellt. Die resultierenden Monolithen besitzen ein bimodales Porensystem mit einer Makroporengröße von ca 1-2 µm und Mesoporen von 13-15nm. Die Monolithen werden dann in ein passgenaues Metallrohr ohne weitere Aufbringung einer Zwischenschicht oder Vorbehandlung des Metallrohrs gelegt und in eine für das "Rundkneten" geeignete Vorrichtung gespannt. Das Edelstahlrohr wird dann bei gleichzeitigem Drehen radial auf den Kieselgelmonolithen in mehreren Arbeitsschritten "geknetet" bis das Metallrohr direkt auf den Monolithen ohne Totvolumen an der Grenzfläche aufliegt. Die so ummantelten Monolithen werden an den Enden gekürzt und liegen dann in einer Dimension 100x3mm als Kartusche ohne Gewinde und Endfittings vor (siehe Fig. 1).

Die so ummantelten Monolithen werden dann in eine passende Halterung eingespannt. Die Metallhalterung besteht aus einem Metallrohr, welches an den Enden jeweils mit einem Gewinde versehen ist. Die metallummantelte Monolithenkartusche wird in das Rohr gelegt und von außen mit zwei Endstücken, die auf die beiden Gewinde gedreht werden, befestigt. Zur endgültigen Abdichtung liegt in den Endfittings eine Metallfritte mit Metallring, die beim Aufschrauben auf das Halterungsrohr, die Kartusche abdichtet, sodass kein Eluent beim Durchpumpen austreten kann.

Die metallummantelten Kartuschen werden zur Oberflächenmodifizierung in den Metallhalter eingespannt und in situ mit C18 Silan wie in J. Chromatogr. 1130 (2006) 175-181 beschrieben, derivatisiert. Hierzu werden die Kieselgelmonolithen zunächst mit ACN und trockenem Toluol im Durchfluss mit 1mL/min für 2h gewaschen. Anschließend wird eine 20% (v/v) Lösung von Octadecyldimethyl-N,N-diethylaminosilan in ACN mit einem langsamen Fluss (ca. 0.1mL/ min) für 5h durch die Säule gepumpt.

Bei dieser Durchführung liegt die Säule in einem Ofen bei 60°C und zur Vorerhitzung der Silanlösung ist eine 60 cm lange Kapillare, die ebenfalls im Ofen liegt, am Säulenkopf angeschlossen.

Die so hergestellte Säule wird in ein geeignetes HPLC System eingespannt und mit ACN/Wasser (60/40; v/v) chromatographisch auf Trennleistung und Peaksymmetrie getestet.

**HPLC Bedingungen:**

| | |
|---|---|
| Eluent: | ACN/Wasser 60/40 |
| Fluss: | 0,85 mL/min |
| Detektion: | UV 254 nm |
| Temperatur: | RT |
| Injektionsvolumen: | 1,0 µL |
| Proben:Thioharnstoff | 2,1 mg |
| Biphenyl-2-ol | 5,4 mg |
| Progesteron | 11,6 mg |
| Hexanophenon | 12,3 mg |
| Anthracen | 1,8 mg gelöst in 100 mL |

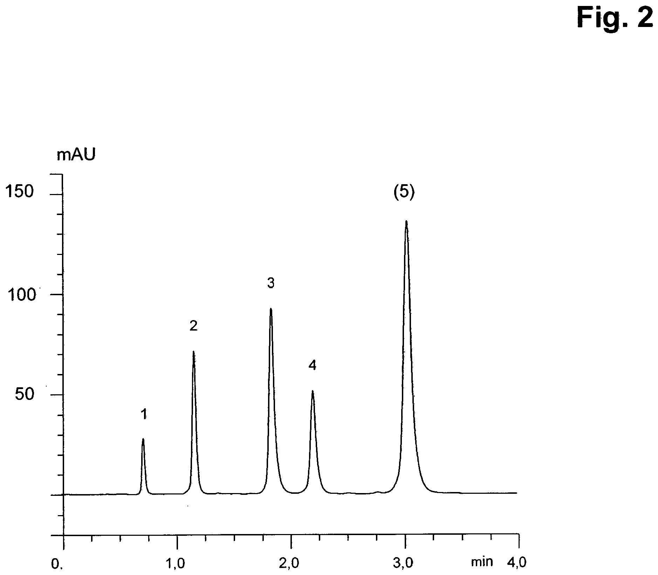

Das erhaltene Chromatogramm ist in Fig. 2 gezeigt.

Die Säule zeigt die Basislinientrennung von 5 Substanzen; Anthracen (Peak 5) zeigt ein N/m: 96.110 sowie eine Peaksymmetrie von Tusp: 1.3 (leichtes Tailing). Es werden keine Doppelpeaks oder Fronting beobachtet, die Hinweise auf Totvolumina zwischen Monolith und Metallrohr geben könnten.

### Beispiel 2

Ein Kieselgelmonolith in der Dimension 150x3 mm wurde wie unter 1) beschrieben über einen Sol Gel Prozess hergestellt. Anschließend wird er in einer 20%igen Lösung von Octadecyldimethyl-N,N-diethylaminosilan in Toluol unter Rückfluss für 5h derivatisiert. Danach wird der Monolith in n-Heptan gewaschen und getrocknet. Anschließend wird der Monolith in einer 20%igen Lösung von Trimethylsilyl-imidazol (TMSI) in ACN für 2,5h bei 60°C endgecappt und in ACN gewaschen.

Der als C18e derivatisierte Monolith wird dann wie unter 1) direkt mit einem Metallrohr ummantelt und für die chromatographische Testung in einer Halterung mittels einer HPLC-Anlage getestet.

**HPLC Bedingungen:**

| | |
|---|---|
| Eluent: | ACN/Wasser 60/40 |
| Fluss: | 0,85 mL/min |
| Det. UV | 254nm |
| Temp. | RT |
| Injvol.: | 1,0 µL |
| Proben:Thioharnstoff | 2,1 mg |
| Biphenyl-2-ol | 5,4 mg |
| Progesteron | 11,6 mg |
| Hexanophenon | 12,3 mg |
| Anthracen | 1,8 mg gelöst in 100 mL |

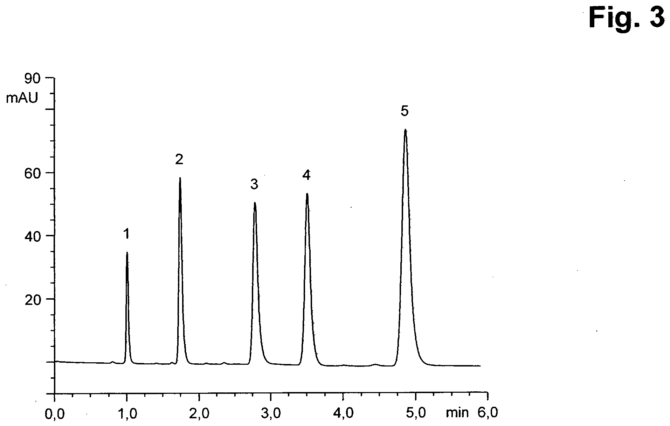

Das erhaltene Chromatogramm ist in Fig. 3 gezeigt. Die folgende Tabelle gibt die Ergebnisse zusätzlich numerisch wieder:

| **No.** | **Ret.Time** | **Peakname** | **K'** | **TUSP** | **N/m** |
|---|---|---|---|---|---|
| | min | | | | |
| 1 | 1,008 | Thioharnstoff | 0,00 | 1,31 | 40370 |
| 2 | 1,748 | Biphenyl-2ol | 0,73 | 1,32 | 51370 |
| 3 | 2.787 | Progesteron | 1,76 | 1,41 | 52730 |
| 4 | 3,513 | Hexanophenon | 2,48 | 1,23 | 63940 |
| 5 | 4,867 | Anthracen | 3,82 | 1,28 | 62630 |

Anthracen wird mit einer Trennleistung von 62.630N/m und einer Peaksymmetrie von 1,28 Tusp chromatographiert. Da die Ummantelung im kalten Zustand erfolgt, kommt es nicht zu Abbrennungen von C18-Silan in der Randpartie der Monolithen (wie üblicherweise bei Kunststoffummantelungen beobachtet, die bei hohen Temperaturen, wie z.B. ca. 400°C auf den Monolithen aufgebracht werden). Durch das erfindungsgemäße Verfahren können Monolithen daher als C18e Derivat ohne weitere Nachbehandlung mit dem Metallrohr ummantelt werden.

### Beispiel 3

Ein weiterer Kieselgelmonolith in der Dimension 150x3mm wurde wie unter 2) beschrieben über einen Sol Gel Prozess und C18e Derivatisierung hergestellt und mit einem Metallrohr ummantelt.

Der als C18e derivatisierte Monolith wird dann wie unter 1) beschrieben chromatographisch getestet.

**HPLC Bedingungen:**

| | |
|---|---|
| Eluent: | ACN/Wasser 60/40 |
| Fluss: | 0,85 mL/min |
| Det. | UV 254nm |
| Temp. | RT |
| Injvol.: | 1,0 µL |
| Proben:Thioharnstoff | 2,1 mg |
| Biphenyl-2-ol | 5,4 mg |
| Progesteron | 11,6 mg |
| Hexanophenon | 12,3 mg |
| Anthracen | 1,8 mg gelöst in 100 mL |

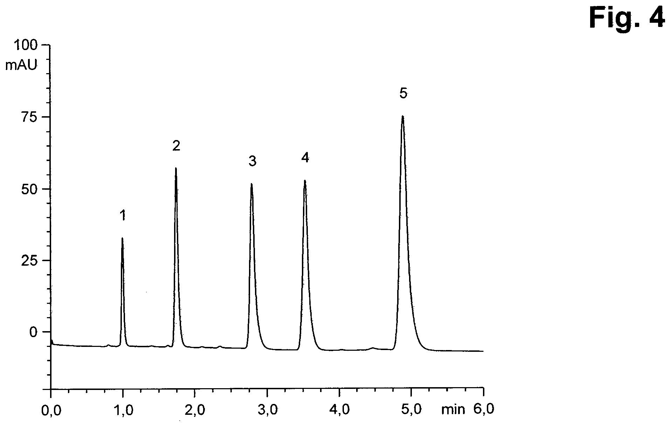

Das erhaltene Chromatogramm ist in Fig. 4 gezeigt. Die folgende Tabelle gibt die Ergebnisse zusätzlich numerisch wieder:

| **No.** | **Ret.Time** | **Peakname** | **K'** | **TUSP** | **N/m** |
|---|---|---|---|---|---|
| | min | | | | |
| 1 | 0,998 | Thioharnstoff | 0,00 | 1,29 | 37140 |
| 2 | 1,743 | Biphenyl-20l | 0,75 | 1,44 | 50870 |
| 3 | 2,793 | Progesteron | 1,80 | 1,57 | 60453 |
| 4 | 3,532 | Hexanophenon | 2,54 | 143 | 71930 |
| 5 | 4,893 | Anthracen | 3,90 | 1,50 | 72010 |

Anthracen wird mit einer Trennleistung von 72.010 N/m und einer Peaksymmetrie von 1,50 Tusp chromatographiert. Es sind keine Doppelpeaks oder Fronting erkennbar, die ein Totvolumen zwischen Metallrohr und Monolith anzeigen würden.

### Beispiel 4

Ein Kieselgelmonolith in der Dimension 100x3 mm wurde wie unter 1) beschrieben hergestellt und auf Druckstabilität getestet.

Hierzu wird die Metallkartusche in die Metallhalterung gelegt und an ein HPLC System angeschlossen. Es wird dann mit einem Fluss von 0,85ml/min und einem resultierenden Säulenrückdruck von 50 bar chromatographiert und die Leistungsdaten aufgenommen. Anschließend wird der Fluss verdoppelt auf 1,7 ml/min, was eine Verdopplung des Säulenrückdrucks (100 bar) zur Folge hat. Danach wird noch zweimal der Fluss auf jeweils 3,4 ml/min und 6,8 ml/min verdoppelt. Der resultierende Säulenrückdruck liegt unter diesen Bedingungen bei 195 bar bzw. 326 bar. Unter letzteren Bedingungen hätte der Rückdruck ca. 400 bar betragen müssen. Kleine Undichtigkeiten an den Verschraubungen im Metallhalter haben wohl zu einem Druckabfall geführt.

Ein anschließender Rücktest unter den Startbedingungen mit einem Fluss von 0,85ml/min ergibt gleichwertige Leistungswerte wie beim Start, was darauf schließen lässt, dass die Säule unter diesen Bedingungen stabil ist.

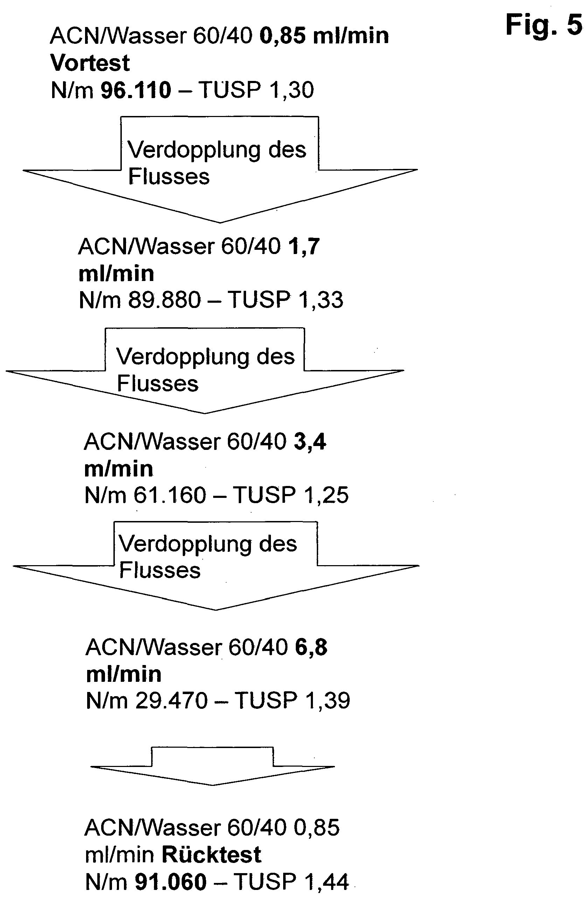

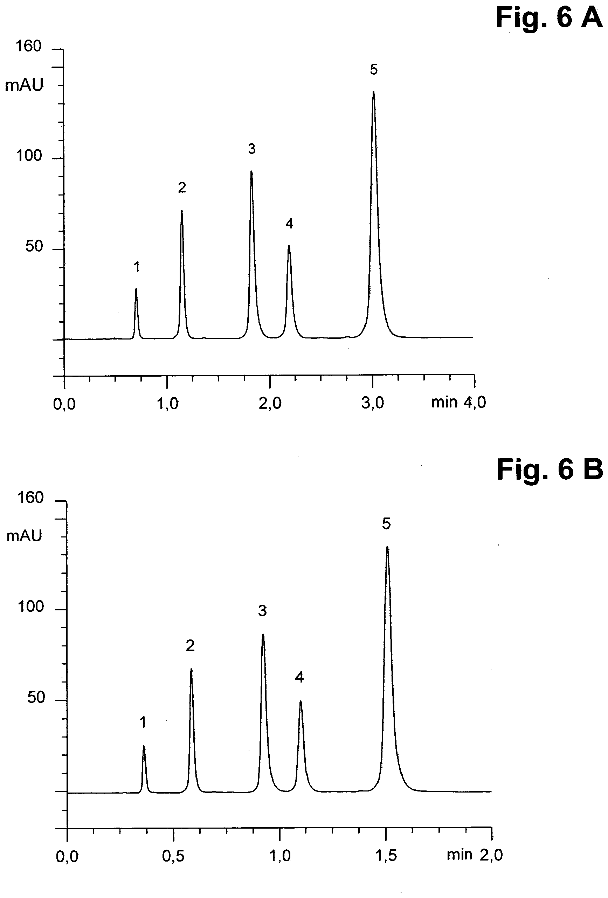

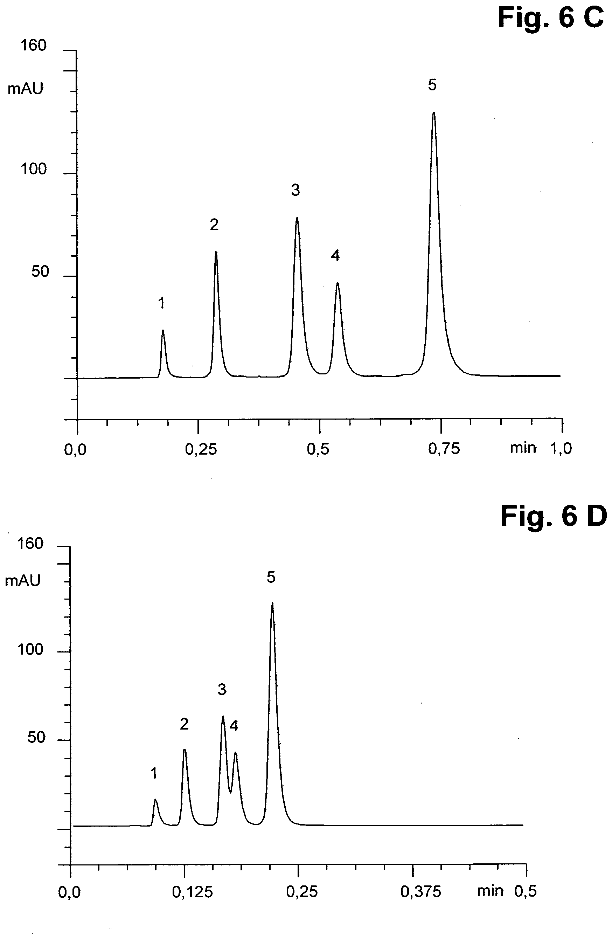

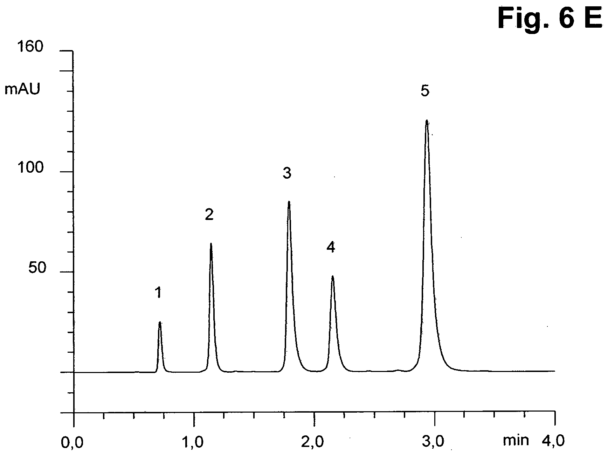

Das oben beschriebene Chromatographie-Schema ist noch einmal als Flussdiagramm in Fig. 5 gezeigt. Fig. 6A bis E zeigen die in den jeweiligen Schritten erhaltenen Chromatogramme. Mit A ist dabei das bei 50 bar erhaltene Chromatogramm gezeigt, mit B das bei 100 bar erhaltene und so weiter. Chromatogramm E zeigt den Rücktest, der erneut bei 50 bar durchgeführt wird.

## Patentansprüche

1. Verfahren zur Herstellung von Chromatographiesäulen mit einem monolithischen Sorbens, das mit einem Metallrohr ummantelt ist, durch
a) Bereitstellen eines zylinderförmigen monolithischen Sorbens und eines Metallrohrs, das einen inneren Durchmesser hat, der größer ist als der Durchmesser des monolithischen Sorbens;
b) Einführen des monolithischen Sorbens in das Metallrohr;
das Verfahren **gekennzeichnet durch**:
c) Aufbringen des Metallrohrs auf das monolithische Sorbens durch Kaltumformung.

2. Verfahren nach Anspruch 1, **dadurch gekennzeichnet, dass** das Metallrohr ein Edelstahlrohr ist.

3. Verfahren nach Anspruch 1 oder 2, **dadurch gekennzeichnet, dass** die Kaltumformung in Schritt c) durch Rundkneten erfolgt.

4. Verfahren nach Anspruch 3, **dadurch gekennzeichnet, dass** das Rundkneten in Schritt c) mit einem Hämmerwerkzeug mit zwei Hämmerbacken erfolgt und die Drehzahl zwischen 500 min⁻¹ und 1500 min⁻¹ beträgt.

5. Verfahren nach einem oder mehreren der Ansprüche 1 bis 4, **dadurch gekennzeichnet, dass** in Schritt a) der Innendurchmesser des Metallrohrs 0,1 bis 0,25 mm größer ist als der Außendurchmesser des monolithischen Sorbens.

6. Verfahren nach einem oder mehreren der Ansprüche 1 bis 5, **dadurch gekennzeichnet, dass** das monolithische Sorbens aus Kieselgel oder anorganisch/organischen Hybridmaterialien besteht.

7. Verfahren nach einem oder mehreren der Ansprüche 1 bis 6, **dadurch gekennzeichnet, dass** in Schritt a) ein monolithisches Sorbens bereitgestellt wird, das eine Länge von 1 cm bis 30 cm hat und einen Durchmesser von 1 mm bis 5 cm.

8. Verfahren nach einem oder mehreren der Ansprüche 1 bis 7, **dadurch gekennzeichnet, dass** in einem zusätzlichen Schritt d) das mit dem Metallrohr ummantelte monolithische Sorbens mit Anschlüssen für Lösungsmittel zu- und ablauf versehen wird.

9. Verfahren nach einem oder mehreren der Ansprüche 1 bis 8, **dadurch gekennzeichnet, dass** das in Schritt a) bereitgestellte monolithische Sorbens mit Separationseffektoren derivatisiert ist.

## Claims

1. Process for the production of chromatography columns containing a monolithic sorbent which is clad with a metal tube, by
a) provision of a cylindrical monolithic sorbent and a metal tube which has an internal diameter that is greater than the diameter of the monolithic sorbent;
b) introduction of the monolithic sorbent into the metal tube;
the process is **characterised by**:
c) application of the metal tube to the monolithic sorbent by cold forming.

2. Process according to Claim 1, **characterised in that** the metal tube is a stainless-steel tube.

3. Process according to Claim 1 or 2, **characterised in that** the cold forming in step c) is carried out by rotary swaging.

4. Process according to Claim 3, **characterised in that** the rotary swaging in step c) is carried out using a hammering tool having two hammering jaws and the speed of rotation is between 500 min⁻¹ and 1500 min⁻¹.

5. Process according to one or more of Claims 1 to 4, **characterised in that** in step a) the internal diameter of the metal tube is 0.1 to 0.25 mm greater than the external diameter of the monolithic sorbent.

6. Process according to one or more of Claims 1 to 5, **characterised in that** the monolithic sorbent consists of silica gel or inorganic/organic hybrid materials.

7. Process according to one or more of Claims 1 to 6, **characterised in that** in step a) a monolithic sorbent having a length of 1 cm to 30 cm and a diameter of 1 mm to 5 cm is provided.

8. Process according to one or more of Claims 1 to 7, **characterised in that** in an additional step d) the monolithic sorbent clad with the metal tube is provided with connections for solvent feed and discharge.

9. Process according to one or more of Claims 1 to 8, **characterised in that** the monolithic sorbent provided in step a) has been derivatised with separation effectors.

## Revendications

1. Procédé pour la fabrication de colonnes de chromatographie contenant un sorbant monolithique qui est gainé à l'aide d'un tube en métal, au moyen de :
a) la fourniture d'un sorbant monolithique cylindrique et d'un tube en métal qui présente un diamètre interne qui est plus important que le diamètre du sorbant monolithique ;
b) l'introduction du sorbant monolithique à l'intérieur du tube en métal ;
le procédé étant **caractérisé par** :
c) l'application du tube en métal sur le sorbant monolithique au moyen d'un formage à froid.

2. Procédé selon la revendication 1, **caractérisé en ce que** le tube en métal est un tube en acier inoxydable.

3. Procédé selon la revendication 1 ou 2, **caractérisé en ce que** le formage à froid au niveau de l'étape c) est mis en oeuvre au moyen d'un épointage rotatif.

4. Procédé selon la revendication 3, **caractérisé en ce que** l'épointage rotatif au niveau de l'étape c) est mis en oeuvre en utilisant un outil de martelage qui comporte deux mâchoires de martelage et la vitesse de rotation se situe entre 500 min⁻¹ et 1500 min⁻¹.

5. Procédé selon une ou plusieurs des revendications 1 à 4, **caractérisé en ce que**, au niveau de l'étape a), le diamètre interne du tube en métal est de 0,1 à 0,25 mm plus important que le diamètre externe du sorbant monolithique.

6. Procédé selon une ou plusieurs des revendications 1 à 5, **caractérisé en ce que** le sorbant monolithique est constitué par du gel de silice ou par des matériaux hybrides inorganiques/organiques.

7. Procédé selon une ou plusieurs des revendications 1 à 6, **caractérisé en ce que**, au niveau de l'étape a), un sorbant monolithique qui présente une longueur de 1 cm à 30 cm et un diamètre de 1 mm à 5 cm est prévu.

8. Procédé selon une ou plusieurs des revendications 1 à 7, **caractérisé en ce que**, au niveau d'une étape additionnelle d), le sorbant monolithique qui est gainé à l'aide du tube en métal est muni de connexions pour une alimentation en solvant et une évacuation du solvant.

9. Procédé selon une ou plusieurs des revendications 1 à 8, **caractérisé en ce que** le sorbant monolithique qui est prévu au niveau de l'étape a) a été soumis à dérivatisation à l'aide d'effecteurs de séparation.
